(19)

Europäisches Patentamt

European Patent Office

Office européen des brevets

(11)     **EP 4 228 190 A1**

(12)                          **EUROPEAN PATENT APPLICATION**
                          published in accordance with Art. 153(4) EPC

(43) Date of publication:
**16.08.2023 Bulletin 2023/33**

(21) Application number: **21879040.0**

(22) Date of filing: **20.07.2021**

(51) International Patent Classification (IPC):
*H04L 5/00* (2006.01)        *H04W 4/40* (2018.01)

(86) International application number:
**PCT/CN2021/107406**

(87) International publication number:
**WO 2022/077993 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.10.2020 CN 202011092249**

(71) Applicant: **GUANGDONG OPPO MOBILE
TELECOMMUNICATIONS
CORP., LTD.
Dongguan, Guangdong 523860 (CN)**

(72) Inventor: **LIU, Jun
Dongguan, Guangdong 523860 (CN)**

(74) Representative: **Penza, Giancarlo
Bugnion S.p.A.
Viale Lancetti, 17
20158 Milano (IT)**

(54)    **TRANSMISSION PARAMETER DETERMINATION METHOD AND APPARATUS AND TERMINAL DEVICE**

(57)     The present invention is applied to the technical field of communications, and disclosed in embodiments thereof are a transmission parameter determination method and apparatus and a terminal device, which can solve the problem in the existing technology of data loss during data transmission. The method comprises: determining the number of first frequency domain subchannels allocated for data to be transmitted; in a future authorization transmission window within a current transmission time window, determining the maximum number of frequency domain subchannels corresponding to the data to be transmitted, the maximum number of frequency domain subchannels being determined according to a limiting condition of channel occupancy; and if the number of first frequency domain subchannels is greater than the maximum number of frequency domain subchannels, then using the number of second frequency domain subchannels as a transmission parameter for transmitting the data to be transmitted, the number of second frequency domain subchannels being less than or equal to the maximum number of frequency domain subchannels.

FIG. 3

## Description

This application claims priority to a Chinese Patent Application No. 2020110922491 filed on October 13, 2020, titled "TRANSMISSION PARAMETER DETERMINATION METHOD AND APPARATUS AND TERMINAL DEVICE", the entire disclosures of which are incorporated herein by reference.

### TECHNICAL FIELD

The disclosure relates to the field of communication technologies, and more particularly, to a transmission parameter determination method, a transmission parameter determination apparatus, and a terminal device.

### BACKGROUND

In the cellular-vehicle to everything (C-V2X), a channel occupancy ratio is a parameter used to represent a ratio of a time-frequency resource(s) occupied by a terminal device transmitting data in a certain transmission time window to all available time-frequency resources in the transmission time window. The channel occupancy ratio of the terminal device is limited to thereby ensure throughput of the data transmitted by the terminal device. Since a frequency resource(s) occupied by historical transmission data in a history transmission window within the transmission time window is fixed, a process of transmitting data in a future transmission window within the transmission time window needs to be processed to thereby ensure that a limitation of the channel occupancy ratio is met. At present, when it is estimated that transmission of data to be transmitted in a future authorized transmission window within the transmission time window does not meet the limitation of the channel occupancy ratio, the transmission of the data to be transmitted would be abandoned and the data to be transmitted would be discarded, to thereby meet the limitation of the channel occupancy ratio. However, such processing would result in data loss during transmission of data.

### SUMMARY

Embodiments of the disclosure provide a transmission parameter determination method, a transmission parameter determination apparatus and a terminal device, in order to solve the problem of data loss during transmission of data in the related art.

To solve the above technical problem, embodiments of the disclosure are realized as follows.

In a first aspect, the transmission parameter determination method is provided. The method includes: determining a first number of a frequency-domain subchannel allocated for data to be transmitted;

determining, in a future authorized transmission window within a current transmission time window, a maximum number of the frequency-domain subchannel corresponding to the data to be transmitted, where the maximum number of the frequency-domain subchannel is determined according to a limitation of a channel occupancy ratio; and

taking a second number of the frequency-domain subchannel as a transmission parameter for transmitting the data to be transmitted, in response to the first number of the frequency-domain subchannel being greater than the maximum number of the frequency-domain subchannel;

where the second number of the frequency-domain subchannel is less than or equal to the maximum number of the frequency-domain subchannel.

In a second aspect, the transmission parameter determination apparatus is provided. The apparatus includes: a processing module, configured to determine a first number of a frequency-domain subchannel allocated for data to be transmitted;

determine, in a future authorized transmission window within a current transmission time window, a maximum number of the frequency-domain subchannel corresponding to the data to be transmitted, wherein the maximum number of the frequency-domain subchannel is determined according to a limitation of a channel occupancy ratio; and

take a second number of the frequency-domain subchannel as a transmission parameter for transmitting the data to be transmitted, in response to the first number of the frequency-domain subchannel being greater than the maximum number of the frequency-domain subchannel;

where the second number of the frequency-domain subchannel is less than or equal to the maximum number of the frequency-domain subchannel.

In a third aspect, a terminal device is provided. The terminal device includes a processor, a memory, and a computer program stored on the memory and executable by the processor. When the computer program is executed by the processor, the transmission parameter determination method in the first aspect is implemented.

In a fourth aspect, a computer-readable storage medium is provided. The computer-readable storage medium is stored with a computer program, and the computer program is configured to be executed by a processor to implement the transmission parameter determination method in the first aspect.

In various embodiments of the disclosure, the first number of the frequency-domain subchannel allocated for the data to be transmitted is determined; the maximum number of the frequency-domain subchannel corresponding to the data to be transmitted in the future authorized transmission window within the current transmission time window is determined, and the maximum

3            EP 4 228 190 A1            4

number of the frequency-domain subchannel is determined according to the limitation of the channel occupancy ratio; and the second number of the frequency-domain subchannel is taken as the transmission parameter for transmitting the data to be transmitted, in response to the first number of the frequency-domain subchannel being greater than the maximum number of the frequency-domain subchannel; the second number of the frequency-domain subchannel is less than or equal to the maximum number of the frequency-domain subchannel. By implementing the scheme, the first number of the frequency-domain subchannel allocated for the data to be transmitted may be compared with the maximum number of the frequency-domain subchannel corresponding to the data to be transmitted in the future authorized transmission window. When the first number of the frequency-domain subchannel is greater than the maximum number of the frequency-domain subchannel, it is considered that the allocated first number of the frequency-domain subchannel cannot satisfy the limitation of the channel occupancy ratio, and the second number of the frequency-domain subchannel, which is less than or equal to the maximum number of the frequency-domain subchannel, is taken as the transmission parameter for the data to be transmitted. In this way, the limitation of the channel occupancy ratio may be met so that the data to be transmitted may be transmitted through frequency-domain subchannels having the second number of the frequency-domain subchannel without discarding the data to be transmitted, thereby avoiding the data loss during data transmission.

BRIEF DESCRIPTION OF THE DRAWINGS

To more clearly illustrate technical solutions in embodiments of the disclosure, drawings used in the description of the embodiments and the related art will be briefly described below. Apparently, the drawings in the following description are merely some embodiments of the disclosure, other drawings may also be obtained according to these drawings.

FIG. 1 is a schematic scenario diagram of C-V2X according to an embodiment of the disclosure;
FIG. 2 is a schematic diagram of a channel occupancy situation of data transmission according to an embodiment of the disclosure;
FIG. 3 is a schematic diagram of a transmission parameter determination method according to an embodiment of the disclosure;
FIG. 4 is a schematic diagram of adjusting a number of a frequency-domain subchannel to meet a limitation of a channel occupancy ratio according to an embodiment of the disclosure;
FIG. 5 is a schematic diagram of a transmission parameter determination method according to another embodiment of the disclosure;
FIG. 6 is a schematic diagram of a transmission parameter determination method according to yet another embodiment of the disclosure;
FIG. 7 is a schematic diagram of a transmission parameter determination apparatus according to an embodiment of the disclosure; and
FIG. 8 is a schematic hardware structural diagram of a terminal device according to an embodiment of the disclosure.

DETAILED DESCRIPTION OF EMBODIMENTS

Technical solutions in embodiments of the disclosure will be clearly and completely described below with reference to the accompanying drawings in the embodiments of the disclosure. Apparently, the described embodiments are merely some but not all of embodiments of the disclosure. Based on the described embodiments of the disclosure, all other embodiments obtained by those of ordinary skill in the art without paying creative efforts shall fall within the scope of protection of the disclosure.

It should be understood that terms "first", "second", etc. in the specification and appended claims of the disclosure may be used herein to distinguish different objects but do not describe a specific order of the objects. For example, a first number of a frequency-domain subchannel (also referred to as first frequency-domain subchannel number) and a second number of the frequency-domain subchannel (also referred to as second frequency-domain subchannel number) are used to distinguish different numbers of the frequency-domain subchannel, but are not used to describe a specific order of the numbers of the frequency-domain subchannel.

It should be noted that, in various illustrated embodiments of the disclosure, terms such as "exemplary" or "for example/ such as" are used to represent examples, illustrations, or implementations. In the disclosure, any embodiment or designed solution described as "exemplary" or "for example/ such as" should not be construed as preferred or advantageous over other embodiments or designed solutions. Instead, the use of words such as "exemplary" or "such as" is intended to illustrate related concepts in a specific manner.

First, related technical contents of embodiments of the disclosure will be introduced as follows.

The vehicle to everything (abbreviated as V2X) hopes to enable information interaction between vehicles and all entities that may affect the vehicles, which can reduce the occurrence of accidents, ease traffic congestion, reduce environmental pollution, and provide other information services.

Early V2X is mainly based on dedicated short range communication (DSRC) technology, and cellular V2X (C-V2X), that is, a V2X technology based on cellular communication technology, emerges later with the development of cellular mobile communication technology.

3rd generation partnership project (3GPP) defines a kind of V2X technology based on cellular mobile

3

communication technology as C-V2X, which includes a V2X system based on an LTE network and a V2X system for 5G network and is a useful complement to DSRC technology. C-V2X may be implemented with a long-term evolution (LTE) network or 5G network to achieve an information interaction of vehicle to vehicle (V2V), an information interaction of vehicle to infrastructure (V2I), an information interaction of vehicle to pedestrian (V2P), and an information interaction of vehicle to network (V2N). This technology may be adapted to complex safety application scenarios and meet low latency and high reliability requirements.

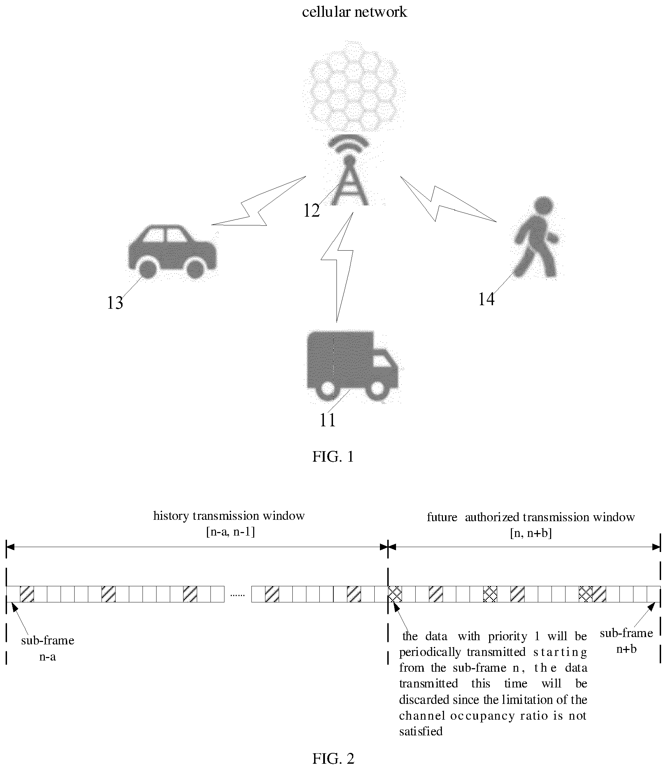

Exemplarily, as a schematic scenario diagram of C-V2X illustrated in FIG. 1, a vehicle 11 may communicate with a base station 12, the vehicle 11 may also communicate with another vehicle 13, and the vehicle 11 may further communicate with a mobile phone or a wearable device of a pedestrian 14.

When a terminal device transmits data in the C-V2X, the data will be transmitted within a preset transmission time window, and the channel occupancy ratio represents a rate of a time-frequency resource occupied by the terminal to transmit the data within the transmission time window to all available time-frequency resources in such transmission time window. A limitation is placed on the channel occupancy ratio of the terminal device to ensure throughput of data sent by the terminal device.

Specifically, a limitation applied to the channel occupancy ratio of the terminal device is expressed as the following formula 1.

The

$$\text{formula 1: } \sum_{i \geq k} CR(i) \leq CR_{Limit}(k)$$

where CR(i) denotes a channel occupancy ratio, which is estimated by the terminal device before transmitting data, of the data to be transmitted with priority $i$, and $CR_{Limit}(k)$ denotes a limit value of a channel occupancy ratio corresponding to priority k configured by a higher layer.

Specifically, the priority of the data to be transmitted may be obtained from sidelink control information (SCI).

The above channel may be a physical sidelink shared channel (PSSCH) in at least one alternative embodiment.

A part of the transmission time window before a current moment is a history transmission time window, and a part of the transmission time window after the current moment is a future authorized transmission window.

Exemplarily, in a schematic diagram of an occupancy situation of a transmission data channel illustrated in FIG. 2, a history transmission window and a future authorized transmission window form a transmission time window. That is to say, the transmission time window refers to sub-frames from a sub-frame n-a to a sub-frame n+b.

In some embodiments of the disclosure, a current transmission time window refers to the transmission time window in which the current moment is located.

Since a frequency resource occupied by historical transmission data in the history transmission window within the transmission time window is fixed, a process of transmitting data in the future authorized transmission window within the transmission time window needs to be processed to meet the limitation of the channel occupancy. There are two processing methods: discarding the data to be transmitted or reducing the frequency-domain resources occupied by the data to be transmitted.

In the related art, when it is estimated that transmitting the to-be-transmitted data in the future authorized transmission window within the transmission time window does not meet the limitation of the channel occupancy ratio, the data transmission is aborted to discard the data to meet the limitation of the channel occupancy ratio. However, such processing results in data loss during the data transmission.

In the related technical solutions, the method of discarding data is adopted to meet the limitation of the channel occupancy ratio. Such the method does not change the transmission parameter, for example, an amount of the adopted frequency-domain resource, of the future authorized transmission window, but directly discards the transmission data.

Exemplarily, in the schematic diagram of the occupancy situation of the transmission data channel illustrated in FIG. 2, the transmission of data on the sub-frame may be dropped directly when the limitation of channel occupancy ratio is not met. Assuming that there already exists a periodical transmission of data with priority 0 in the history transmission window (i.e., from the sub-frame n-a to the sub-frame n-1) and the future authorized transmission window (i.e., from the sub-frame n to the sub-frame n+b) in the transmission time window, and the data to be transmitted with priority 1 will be periodically transmitted from the sub-frame n. It is decided to abandon transmitting the data to be sent with priority 1 on the sub-frame n, when the channel occupancy ratio calculated based on the transmission of the sub-frame n does not satisfy the limitation.

Existing solutions adopt the method of directly discarding data to meet the limitation of the channel occupancy ratio. However, discarding the data directly will reduce system performance, cause data loss, delay a correct reception of information, and affect the driving safety of a V2X system.

Based on the above problems, schemes provided by embodiments of the disclosure propose to change the transmission parameter(s) of the future authorized transmission window. For example, the number of the frequency-domain subchannel occupied by the data to be transmitted may be reduced; and alternatively, the number of the frequency-domain subchannel occupied by the data to be transmitted is reduced, as well as an encoding rate (also refer to as modulation and coding scheme (MCS)) of the data to be transmitted is changed; so that the purpose of meeting the limitation of the channel occupancy ratio can be achieved, rather than employing the method of directly discarding the data to be transmitted.

Since a future authorized transmission from the sub-frame n adopts a semi-static periodical transmission manner, the same frequency-domain subchannel is used. When the number of the adopted frequency-domain subchannel is reduced, the channel occupancy ratio can be reduced, thereby meeting the limitation of the channel occupancy ratio. When fewer frequency-domain subchannels are used to support the transmission of the data to be transmitted, it may require the MCS to be increased accordingly. It is possible to check whether an updated MCS is within a range of MCS, and the updated frequency-domain subchannel and the updated MCS may be taken as transmission parameters to transmit the data when the updated MCS is within the range of MCS.

The transmission parameter determination method provided by embodiments of the disclosure may be performed by a terminal device in the V2X, or a functional module or a functional entity in the terminal device. Specifically, the terminal device may be a mobile phone, a tablet computer, a wearable device, or a vehicle-mounted terminal device, etc.

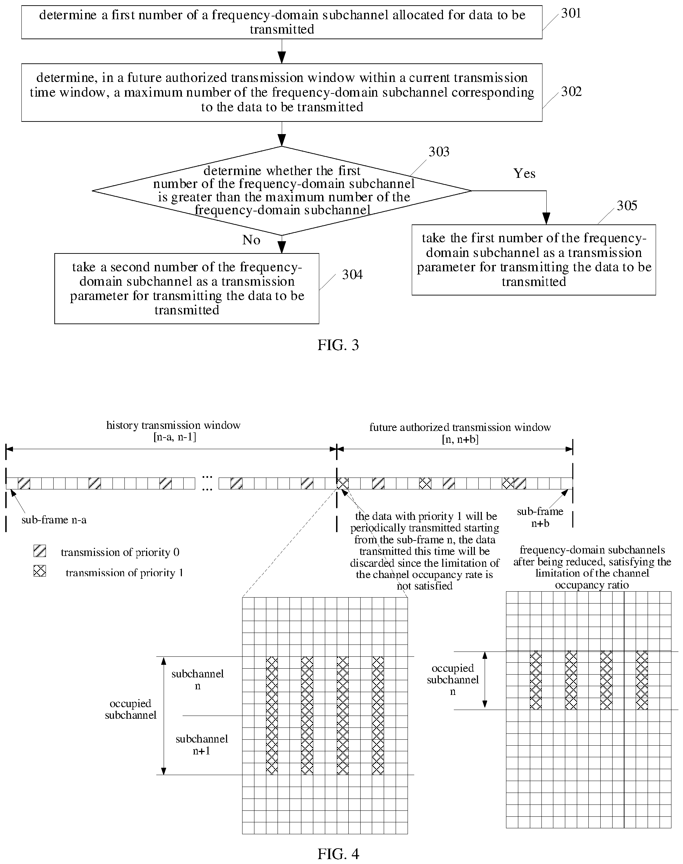

As illustrated in FIG. 3, some embodiments of the disclosure provide a transmission parameter determination method. The method includes operations as follows.

At operation 301, a first number of a frequency-domain subchannel allocated for data to be transmitted is determined.

In embodiments of the disclosure, it is possible to set corresponding priorities for different types of data to be transmitted.

In at least one alternative embodiment, the priority of the data to be transmitted may be determined first, and the first number of the frequency-domain subchannel allocated for the data to be transmitted may be determined according to the priority of the data to be transmitted.

Exemplarily, as shown in Table 1, there is a certain correspondence between the different types of data and the priorities.

Table 1

| data of type A | priority 0 |
|---|---|
| data of type B | priority 1 |
| data of type C | priority 2 |
| ...... | ...... |

Based on the priority of the data to be transmitted, the first number of the frequency-domain subchannel may be allocated for the data to be transmitted before the data transmission.

At operation 302, a maximum number of the frequency-domain subchannel corresponding to the data to be transmitted in a future authorized transmission window within a current transmission time window is determined.

Specifically, the maximum number of the frequency-domain subchannel is determined according to a limitation of a channel occupancy ratio.

In at least one alternative embodiment, the maximum number of the frequency-domain subchannel corresponding to the data to be transmitted in the future authorized transmission window within the current transmission time window may be determined according to the priority of the data to be transmitted.

In at least one alternative embodiment, the operation of determining the maximum number of the frequency-domain subchannel corresponding to the priority of the data to be transmitted in the future authorized transmission window within the current transmission time window includes operations as follows.

At operation A, a maximum channel occupancy ratio corresponding to the priority of the data to be transmitted in the future authorized transmission window is determined.

In at least one alternative embodiment, the maximum channel occupancy ratio corresponding to the data to be transmitted may be calculated according to the for-

$$\sum_{i \geq k} CR(i) \leq CR_{Limit}(k)$$

mula 1 and the priority of the data to be transmitted.

At operation B, a total number of an available frequency-domain subchannel in the future authorized transmission window is calculated.

A total number of an available frequency-domain subchannel in a resource pool in the current transmission time window is calculated is calculated.

A number of a frequency-domain subchannel used by transmitted data in the current transmission time window is calculated.

The total number of available frequency-domain subchannel in the future authorized transmission window is calculated according to the total number of available frequency-domain subchannel in the resource pool and the number of the frequency-domain subchannel used by the transmitted data.

In at least one alternative embodiment, the total number of available frequency-domain subchannel in the future authorized transmission window may be obtained by subtracting the number of the frequency-domain subchannel used by the transmitted data from the total number of available frequency-domain subchannel in the resource pool.

At operation C, the maximum number of the frequency-domain subchannel corresponding to the priority of the data to be transmitted is calculated, according to the maximum channel occupancy ratio and the total number of available frequency-domain subchannel.

In at least one alternative embodiment, the maximum number of the frequency-domain subchannel corresponding to the priority of the data to be transmitted may be obtained by multiplying the total number of available frequency-domain subchannel in the future authorized transmission window with the maximum channel occupancy ratio.

That is to say, since the maximum channel occupancy ratio is calculated according to the limitation of the channel occupancy ratio, the maximum number of the frequency-domain subchannel calculated according to the maximum channel occupancy ratio is determined according to the limitation of the channel occupancy ratio. When an adopted number of the frequency-domain subchannel is less than or equal to the maximum number of the frequency-domain subchannel, the transmission of the data to be transmitted may meet the limitation of the channel occupancy ratio.

At operation 303, it is determined whether the first number of the frequency-domain subchannel is greater than the maximum number of the frequency-domain subchannel.

When the first number of the frequency-domain subchannel is greater than the maximum number of the frequency-domain subchannel, it indicates that the first number of the frequency-domain subchannel does not satisfy the limitation of the channel occupancy ratio, and operation 304 is executed. When the first number of the frequency-domain subchannel is less than or equal to the maximum number of the frequency-domain subchannel, it indicates that the first number of the frequency-domain subchannel satisfies the limitation of the channel occupancy ratio, and operation 305 is executed.

At operation 304, a second number of the frequency-domain subchannel is taken as a transmission parameter for transmitting the data to be transmitted.

At operation 305, the first number of the frequency-domain subchannel is taken as a transmission parameter for transmitting the data to be transmitted.

Specifically, the second number of the frequency-domain subchannel is less than or equal to the maximum number of the frequency-domain subchannel.

FIG. 4 is a schematic diagram of adjusting a number of a frequency-domain subchannel to meet a limitation of a channel occupancy ratio. Assuming that there already exists a periodical transmission of data with priority 0 in the history transmission window (i.e., sub-frames from the sub-frame n-a to the sub-frame n-1) and the future authorized transmission window (i.e., sub-frames from the sub-frame n to the sub-frame n+b), and data with priority 1 will be periodically transmitted from the sub-frame n, and a number of frequency-domain subchannels initially allocated for data with priority 1 is two (as the subchannel n and the subchannel n+1 illustrated in FIG. 4). When transmitting data based on such transmission parameter, the calculated channel occupancy ratio does not meet the limitation of the channel occupancy ratio. In order to satisfy the channel occupancy limit, the two frequency-domain subchannels which are initially occupied by the data with priority 1 are reduced to one frequency-domain subchannel (i.e., the subchannel n as illustrated in FIG. 4) to satisfy the limitation of the channel occupancy ratio.

In at least one alternative embodiment, the above data to be transmitted may be transmitted according to the determined transmission parameter after operation 304 or 305.

By implementing the transmission parameter determination method provided in the illustrated embodiments of the disclosure, the first number of the frequency-domain subchannel allocated for the data to be transmitted is determined; the maximum number of the frequency-domain subchannel corresponding to the data to be transmitted in the future authorized transmission window within the current transmission time window is determined, and the maximum number of the frequency-domain subchannel is determined according to the limitation of the channel occupancy ratio; and the second number of the frequency-domain subchannel is taken as the transmission parameter for transmitting the data to be transmitted, in response to the first number of the frequency-domain subchannel being greater than the maximum number of the frequency-domain subchannel; and the second number of the frequency-domain subchannel is less than or equal to the maximum number of the frequency-domain subchannel. By implementing the scheme, the first number of the frequency-domain subchannel allocated for the data to be transmitted may be compared with the maximum number of the frequency-domain subchannel corresponding to the data to be transmitted in the future authorized transmission window. When the first number of the frequency-domain subchannel is greater than the maximum number of the frequency-domain subchannel, it is considered that the allocated first number of the frequency-domain subchannel cannot satisfy the limitation of the channel occupancy ratio, and the second number of the frequency-domain subchannel, which is less than or equal to the maximum number of the frequency-domain subchannel, is taken as the transmission parameter for the data to be transmitted. In this way, the limitation of the channel occupancy ratio may be satisfied, so that the data to be transmitted may be transmitted through the frequency-domain subchannel having the second number of the frequency-domain subchannel without dropping the data to be transmitted, thereby avoiding the data loss during data transmission.

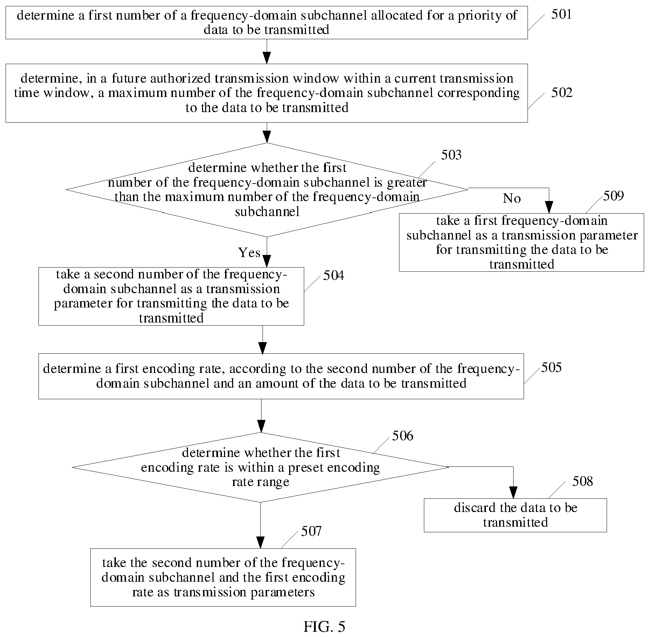

As illustrated in FIG. 5, some embodiments of the disclosure further provide a transmission parameter determination method. The method includes operations as follows.

At operation 501, a first number of a frequency-domain subchannel allocated for a priority data to be transmitted is determined.

At operation 502, a maximum number of the frequency-domain subchannel corresponding to the data to be transmitted in a future authorized transmission window within a current transmission time window is determined.

Specifically, the maximum number of the frequency-domain subchannel is determined according to a limitation of a channel occupancy ratio.

At operation 503, it is determined whether the first number of the frequency-domain subchannel is greater than the maximum number of the frequency-domain subchannel.

The description of operations 501 to 503 may refer to the above description of operations 301 to 303, and these details will not be repeated below.

When the first number of the frequency-domain subchannel is greater than the maximum number of the frequency-domain subchannel, operations 504 to 508 are executed. When the first number of the frequency-domain subchannel is less than or equal to the maximum number of the frequency-domain subchannel, operation 509 is executed.

At operation 504, a second number of the frequency-domain subchannel is determined.

At operation 505, a first encoding rate is determined according to the second number of the frequency-domain subchannel and an amount of the data to be transmitted.

In at least one alternative embodiment, when the number of the frequency-domain subchannel is reduced, it may require to increase MCS to thereby ensure that the data to be transmitted can be transmitted on the reduced time-frequency resources due to the unchanged amount of data to be transmitted.

At operation 506, it is determined whether the first encoding rate is within a preset encoding rate range.

When the first encoding rate is within the preset encoding rate range, operation 507 is executed; or when the first encoding rate is not within the preset encoding rate range, operation 508 is executed.

In some embodiments of the disclosure, the encoding rate range may be preset.

It may be impossible to encode the data to be transmitted according to the first coding rate, when the first encoding rate is too large to exceed the preset encoding rate range, and therefore the data to be transmitted may not be sent properly. Based on the above, after an initial encoding rate is determined, it is necessary to compare the initial encoding rate with the preset encoding rate range.

At operation 507, the second number of the frequency-domain subchannel and the first encoding rate are taken as transmission parameters.

By implementing the transmission parameter determination method provided in the illustrated embodiments, the first number of the frequency-domain subchannel allocated for the data to be transmitted may be compared with the maximum number of the frequency-domain subchannel corresponding to the data to be transmitted in the future authorized transmission window. When the first number of the frequency-domain subchannel is greater than the maximum number of the frequency-domain subchannel, it is considered that the allocated first number of the frequency-domain subchannel cannot satisfy the limitation of the channel occupancy ratio, and the second number of the frequency-domain subchannel, which is less than or equal to the maximum number of the frequency-domain subchannel, is taken as the transmission parameter for the data to be transmitted. Since the number of the occupied frequency-domain channel decreases, the encoding rate for the data to be transmitted may is re-determined based on the second number of the frequency-domain subchannel and the amount of the data to be transmitted, and the second number of the frequency-domain subchannel and the first encoding rate are taken as transmission parameters to transmit the data to be transmitted, so that the limitation of the channel occupancy ratio can be satisfied without discarding the data to be transmitted, thereby avoiding the data loss during the data transmission.

At operation 508, the data to be transmitted is discarded.

When the first encoding rate is within the encoding rate range, it indicates that the first encoding rate may be adopted to encode the data to be transmitted, and the second number of the frequency-domain subchannel and the first encoding rate may be taken as the transmission parameters. When the first encoding rate is not within the encoding rate range, it indicates that the data to be transmitted cannot be encoded based on the first encoding rate, it is possible that the data to be transmitted cannot be sent normally using the second number of the frequency-domain subchannel, and the data to be transmitted may be discarded.

In some embodiments of the disclosure, with regard to discarding the data to be transmitted, the data to be transmitted may be discarded according to the priority thereof. In at least one alternative embodiment, when there are data to be transmitted with multiple priorities, the data to be transmitted with a low priority may be discarded first.

At operation 509, taking the first frequency-domain subchannel as a transmission parameter for transmitting the data to be transmitted.

The first frequency-domain subchannel may be directly taken as the transmission parameter for the data to be transmitted, when the first frequency-domain subchannel may satisfy the limitation of the channel occupancy ratio.

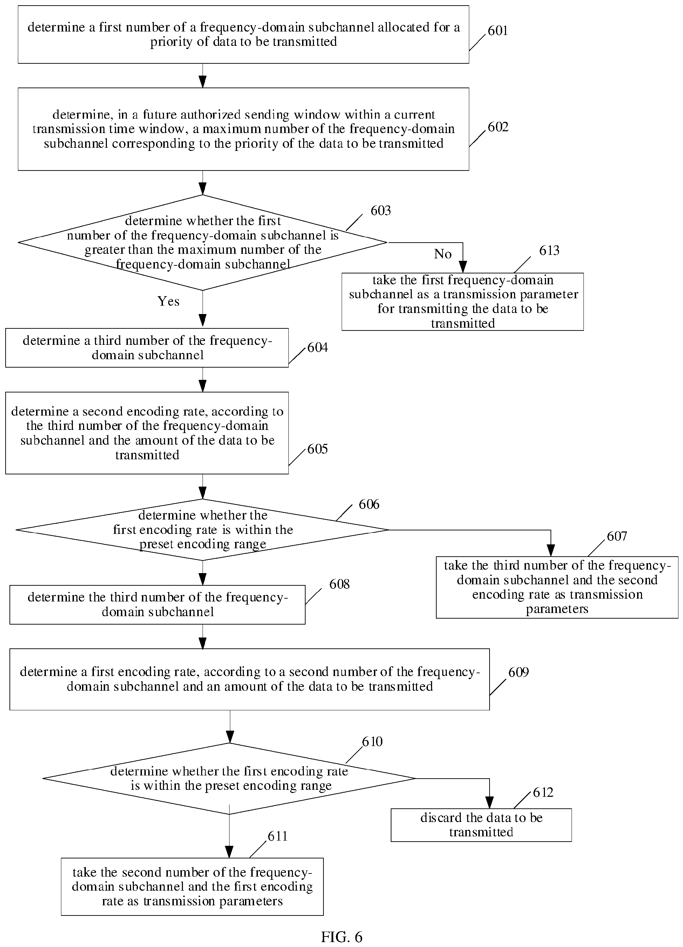

As illustrated in FIG. 6, some embodiments of the disclosure further provide a transmission parameter determination method. The method includes operations as follows.

At operation 601, a first number of a frequency-domain subchannel allocated for a priority of data to be transmitted is determined.

At operation 602, a maximum number of the frequency-domain subchannel corresponding to the priority of the data to be transmitted in a future authorized transmission window within a current transmission time window is determined.

Specifically, the maximum number of the frequency-domain subchannel is determined according to a limitation of a channel occupancy ratio.

At operation 603, it is determined whether the first number of the frequency-domain subchannel is greater than the maximum number of the frequency-domain subchannel.

The description of operations 601 to 603 may refer to the above description of operations 301 to 303, and these details are not repeated herein.

When the first number of the frequency-domain subchannel is greater than the maximum number of the frequency-domain subchannel, it indicates that the first number of the frequency-domain subchannel does not satisfy the limitation of the channel occupancy ratio, and operations 604 to 612 are executed. When the first number of the frequency-domain subchannel is less than or equal to the maximum number of the frequency-domain subchannel, it indicates that the first number of the frequency-domain subchannel satisfies the limitation of the channel occupancy ratio, and operation 613 is executed.

At operation 604, a third number of the frequency-domain subchannel is determined.

In some embodiments of the disclosure, the third number of the frequency-domain subchannel is less than or equal to the maximum number of the frequency-domain subchannel.

In at least one embodiment of the disclosure, in the process of determining the number of the frequency-domain subchannel, a small number of the frequency-domain subchannel may be selected first based on a condition of being less than or equal to the maximum number of the frequency-domain subchannel, then an encoding rate determined based on the selected small number of the frequency-domain subchannel and the amount/size of the data to be transmitted is judged whether is within the preset encoding rate range or not, and when the encoding rate is not within preset encoding rate range, a larger number of the frequency-domain subchannel is further determined.

Exemplarily, assuming that the maximum number of the frequency-domain subchannel is 2, one frequency-domain subchannel (which may refer to the third number of the frequency-domain subchannel) may be determined to be occupied for transmitting the data to be transmitted. 2 frequency-domain subchannels (which may refer to a second number of the frequency-domain subchannel described below) may be further determined to be occupied for transmitting the data to be transmitted, when the encoding rate, which is determined based on the one frequency-domain subchannel and the size of the data to be transmitted, is greater than the maximum of the preset encoding range.

At operation 605, a second encoding rate is determined according to the third number of the frequency-domain subchannel and the amount of the data to be transmitted.

At operation 606, it is determined whether the second encoding rate is within the preset encoding range.

Operation 607 is executed when the second encoding rate is within the preset encoding range; or operations 608 to 612 are executed when the second encoding rate is not within the preset encoding range.

At operation 607, the third number of the frequency-domain subchannel and the second encoding rate are taken as transmission parameters.

At operation 608, the second number of the frequency-domain subchannel is determined.

At operation 609, a first encoding rate is determined according to the second number of the frequency-domain subchannel and an amount of the data to be transmitted.

At operation 610, it is determined whether the first encoding rate is within the preset encoding range.

Operation 611 is executed, when the first encoding rate is within the preset encoding range; and operation 612 is executed, when the first encoding rate is not within the preset encoding range.

At operation 611, the second number of the frequency-domain subchannel and the first encoding rate are taken as transmission parameters.

By implementing the transmission parameter determination method provided in the illustrated embodiments, the first number of the frequency-domain subchannel allocated for the data to be transmitted may be compared with the maximum number of the frequency-domain subchannel corresponding to the data to be transmitted in the future authorized transmission window. When the first number of the frequency-domain subchannel is greater than the maximum number of the frequency-domain subchannel, it is considered that the allocated first number of the frequency-domain subchannel cannot satisfy the limitation of the channel occupancy ratio, and the second number of the frequency-domain subchannel, which is less than or equal to the maximum number of the frequency-domain subchannel, is taken as the transmission parameter for the data to be transmitted. Since the number of the occupied frequency-domain channel decreases, the encoding rate for the data to be transmitted may is re-determined based on the second number of the frequency-domain subchannel and the amount of the data to be transmitted, and the second number of the frequency-domain subchannel and the first encoding rate are taken as the transmission parameter to transmit the data to be transmitted, so that the limitation of the channel occupancy ratio can be satisfied without discarding the data to be transmitted, thereby avoiding the data loss during the data transmission.

Furthermore, in some embodiments of the disclosure, after the frequency-domain subchannel number is determined based on the condition that the frequency-domain subchannel number should be less than or equal to the maximum number of the frequency-domain subchannel, the frequency-domain subchannel number may be adjusted based on whether a corresponding encoding rate calculated based on the frequency-domain subchannel number is within the preset coding rate, so as to enable the frequency-domain subchannel number to meet the limitation of the channel occupancy ratio as well as achieve the actual coding, thereby ensuring that the data to be transmitted can be transmitted based on the determined transmission parameters.

At operation 612, the data to be transmitted is discard.

When the first encoding rate is not within the encoding rate range, it means that the data to be transmitted cannot be encoded based on the first coding rate, and it is possible that the data to be transmitted cannot be transmitted normally using the second number of the frequency-domain subchannel, and the data to be transmitted may be discarded.

At operation 613, the first frequency-domain subchannel is taken as a transmission parameter for transmitting the data to be transmitted.

When the first frequency-domain subchannel itself may satisfy the limitation on the channel occupancy ratio, the first frequency-domain subchannel may be directly taken as the transmission parameter for the data to be transmitted.

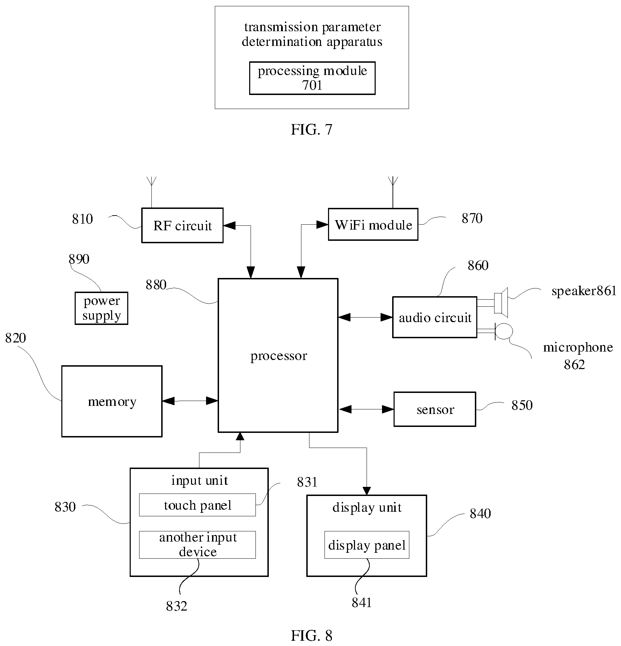

As illustrated in FIG. 7, some embodiments of the disclosure provide a transmission parameter determination apparatus. The apparatus includes a processing module 701.

The processing module 701 is configured to determine a first number of a frequency-domain subchannel allocated for data to be transmitted; determine, in a future authorized transmission window within a current transmission time window, a maximum number of the frequency-domain subchannel corresponding to the data to be transmitted; and take a second number of the frequency-domain subchannel as a transmission parameter for transmitting the data to be transmitted, in response to the first number of the frequency-domain subchannel being greater than the maximum number of the frequency-domain subchannel.

Specifically, the second number of the frequency-domain subchannel is less than or equal to the maximum number of the frequency-domain subchannel.

In at least one alternative embodiment, when taking a second number of the frequency-domain subchannel as a transmission parameter for transmitting the data to be transmitted, the processing module 701 is specifically configured to:

determine the second number of the frequency-domain subchannel;
determine a first encoding rate, according to the second number of the frequency-domain subchannel and an amount of the data to be transmitted; and take the second number of the frequency-domain subchannel and the first encoding rate as the transmission parameters.

In at least one alternative embodiment, the processing module 701 is specifically configured to take, in response to the first encoding rate being within a preset encoding rate range, the second number of the frequency-domain subchannel and the first encoding rate as transmission parameters.

The processing module 701 is further configured to: determining a third number of the frequency-domain subchannel, which is less than the second number of the frequency-domain subchannel, before determining the second number of the frequency-domain subchannel;

determine a second encoding rate, according to the third number of the frequency-domain subchannel and the amount of the data to be transmitted.

The processing module 701 is specifically configured to determine the second number of the frequency-domain subchannel, in response to the second encoding rate being not within a preset encoding rate range.

In at least one alternative embodiment, the processing module 701 is further configured to discard the data to be transmitted, in response to the first encoding rate being not within the preset encoding rate range.

In at least one alternative embodiment, the processing module 701 is specifically configured to: determine, in the future authorized transmission window, a maximum channel occupancy ratio corresponding to the data to be transmitted;

calculate a total number of an available frequency-domain subchannel in the future authorized transmission window; and
calculate, according to the maximum channel occupancy ratio and the total number of available frequency-domain subchannel, the maximum number of the frequency-domain subchannel corresponding to the data to be transmitted.

In at least one alternative embodiment, the processing module 701 is specifically configured to: calculate a total number of an available frequency-domain subchannel in a resource pool in the current transmission time window;

calculate a number of a frequency-domain subchannel used by transmitted data in the current transmission time window; and
calculate, according to the total number of the available frequency-domain subchannel in the resource pool and the number of the frequency-domain subchannel used by the transmitted data, a total number of the available frequency-domain subchannel in the future authorized transmission window.

In at least one alternative embodiment, after determining, in the future authorized transmission window within the current transmission time window, the maximum number of the frequency-domain subchannel corresponding to the data to be transmitted, the processing module 701 is further configured to take, in response to the first number of frequency-domain subchannel being less than or equal to the maximum number of the frequency-domain subchannel, the first number of the frequency-domain subchannel as a transmission parameter for transmitting the data to be transmitted.

Some embodiments of the disclosure further provide a terminal device including the above transmission parameter determination apparatus.

Some embodiments of the disclosure further provide a terminal device. The terminal device may include a processor, a memory, and a computer program stored on the memory and executable by the processor. The computer program can be executed by the processor to implement various processes performed by the terminal device in the above method embodiments, and the same technical effect can be achieved. Details will not repeated to avoid repetition.

Some embodiments of the disclosure further provide a vehicle including the foregoing transmission parameter determination apparatus or the foregoing terminal device.

FIG. 8 is a schematic hardware structural diagram of a terminal device according to an embodiment of the disclosure. The mobile terminal may include components such as a radio frequency (RF) circuit 810, a memory 820, an input unit 830, a display unit 840, a sensor 850, an audio circuit 860, a wireless fidelity (Wi-Fi) module 870, a processor 880, and a power supply 890. Specifically, the RF circuit 810 may include a receiver 811 and a transmitter 812. A person skilled in the art may understand that the structure of the mobile phone shown in FIG. 8 does not constitute a limitation on the mobile phone, and the mobile phone may include more components or fewer components than those shown in the figure, or some components may be combined, or a different component deployment may be used.

The RF circuit 810 may be configured to receive and send a signal in an information receiving and transmission process or a call process, and in particular, after downlink information of a base station is received, send the downlink information to the processor 880 for processing. In addition, the RF circuit transmits uplink data to the base station. In general, the RF circuit 810 includes, but not limited to, an antenna, at least one amplifier, a transceiver, a coupler, a low noise amplifier (LNA), and a duplexer. In addition, the RF circuit 810 may also communicate with a network and another device through wireless communication. The wireless communication may use any communication standard or protocol, including but not limited to global system for mobile communications (GSM), general packet radio service (GPRS), code division multiple access (CDMA), wideband code division multiple access (WCDMA), long term evolution (LTE), email, short messaging service (SMS), and the like.

The memory 820 may be configured to store a software program and a module. The processor 880 runs the software program and the module that are stored in the memory 820, to implement various functional applications and data processing of the mobile phone. The memory 820 may mainly include a program storage area and a data storage area. The program storage area may store an operating system, an application program required by at least one function (for example, a sound playing function and an image playing function), or the like. The data storage area may store data (for example, audio data and a phone book) created according to use of the mobile phone. In addition, the memory 820 may include a high speed random access memory, and may further include a non-volatile memory, such as at least one magnetic disk storage device, a flash memory, or another volatile solid storage device.

The input unit 830 may be configured to receive inputted digit or character information, and generate a keyboard signal input related to the user setting and function control of the mobile phone. Specifically, the input unit 830 may include a touch panel 831 and another input device 832. The touch panel 831, also referred to as a touchscreen, may collect a touch operation of a user on or near the touch panel (such as an operation of a user on or near the touch panel 831 by using any suitable object or accessory such as a finger or a stylus), and drive a corresponding connection apparatus according to a preset program. In at least one alternative embodiment, the touch panel 831 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into a contact coordinate, then sends the contact coordinate to the processor 880, and can receive and execute a command sent by the processor 880. In addition, the touch panel 831 may be implemented by using various types, such as a resistive type, a capacitive type, an infrared type, and a surface acoustic wave type. In addition to the touch panel 831, the input unit 830 may further include the another input device 832. Specifically, the another input device 832 may include, but is not limited to, one or more of a physical keyboard, a functional key (such as a volume control key or a switch key), a track ball, a mouse, and a joystick.

The display unit 840 may be configured to display information inputted by the user or information provided for the user, and various menus of the mobile phone. The display unit 840 may include a display panel 841. In some embodiments, the display panel 841 may be configured by using a liquid crystal display (LCD), an organic light-emitting diode (OLED), or the like. Further, the touch panel 831 may cover the display panel 841. After detecting a touch operation on or near the touch panel, the touch panel 831 transfers the touch operation to the processor 880, to determine a type of a touch event. Then, the processor 880 provides a corresponding visual output on the display panel 841 according to the type of the touch event. Although the touch panel 831 and the display panel 841 are used as two separate parts to implement input and output functions of the mobile phone in FIG. 8, the touch panel 831 and the display panel 841 may be integrated to implement the input and output functions of the mobile phone in some embodiments.

The mobile phone may further include at least one sensor 850 such as an optical sensor, a motion sensor, and other sensors. Specifically, the optical sensor may include an ambient light sensor and a proximity sensor, where the ambient light sensor may adjust luminance of the display panel 841 according to the luminance of the ambient light, and the proximity sensor may switch off the display panel 841 and/or backlight when the mobile phone is moved to the ear. As one type of motion sensor, an acceleration sensor can detect magnitude of accelerations in various directions (generally on three axes), may detect magnitude and a direction of the gravity when static, and may be applied to an application that recognizes the attitude of the mobile phone (for example, switching between landscape orientation and portrait orientation, a related game, and magnetometer attitude calibration), a function related to vibration recognition (such as a pedometer and a knock), and the like. Other sensors, such as a gyroscope, a barometer, a hygrometer, a thermometer, and an infrared sensor, which may be configured in the mobile phone, and details will not be repeated.

The audio circuit 860, a speaker 861, and a microphone 862 may provide audio interfaces between the user and the mobile phone. The audio circuit 860 may transmit, to the loudspeaker 861, an electrical signal obtained by converting received audio data, and the loudspeaker 861 converts the electrical signal into a voice signal for outputting. In addition, the microphone 862 converts a collected sound signal into an electrical signal. After receiving the electrical signal, the audio circuit 860 converts the electrical signal into audio data, and then outputs the audio data. After being processed by the processor 880, the audio data is transmitted through the RF circuit 810 to, for example, another mobile phone or the audio data is outputted to the memory 820 for further processing.

Wi-Fi is a short distance wireless transmission technology. The mobile phone may help, by using the Wi-Fi module 870, a user to receive and transmit an email, browse a web page, access stream media, and the like. This provides wireless broadband Internet access for the user. Although FIG. 8 illustrates the Wi-Fi module 870, it may be understood that the Wi-Fi module is not a necessary component of the mobile phone, and the Wi-Fi module may be omitted as required provided that the scope of the essence of the disclosure is not changed.

The processor 880 is a control center of the mobile phone, and is connected to various parts of the entire mobile phone by using various interfaces and lines. By running or executing the software program and/or the module stored in the memory 820, and invoking data stored in the memory 820, the processor executes various functions of the mobile phone and performs data processing, thereby monitoring the entire mobile phone. In some embodiments, the processor 880 may include one or more processing units. In some embodiments, the processor 880 may integrate an application processor and a modem processor. The application processor mainly processes an operating system, a user interface, an application program, and the like. The modem processor mainly processes wireless communication. It may be understood that the foregoing modem may either not be integrated into the processor 880.

The mobile phone further includes the power supply 890 (such as a battery) for supplying power to the components. In some embodiments, the power supply may be logically connected to the processor 880 by using a power management system, thereby implementing functions such as charging, discharging, and power consumption management by using the power management system. Although not shown in the figure, the mobile phone may further include a camera, a Bluetooth module, and the like, which are not further described herein.

In some embodiments of the disclosure, the processor 880 is configured to: determine a first number of a frequency-domain subchannel allocated for data to be transmitted; determine, in a future authorized transmission window within a current transmission time window, a maximum number of the frequency-domain subchannel corresponding to the data to be transmitted; and take a second number of the frequency-domain subchannel as a transmission parameter for transmitting the data to be transmitted, in response to the first number of the frequency-domain subchannel being greater than the maximum number of the frequency-domain subchannel.

Specifically, the second number of the frequency-domain subchannel is less than or equal to the maximum number of the frequency-domain subchannel.

In at least one alternative embodiment, when taking the second number of the frequency-domain subchannel as the transmission parameter for transmitting the data to be transmitted, the processor 880 is specifically configured to:

> determine the second number of the frequency-domain subchannel;
> determine a first encoding rate, according to the second number of the frequency-domain subchannel and an amount of the data to be transmitted; and
> take the second number of the frequency-domain subchannel and the first encoding rate as transmission parameters.

In at least one alternative embodiment, the processor 880 is specifically configured to take, in response to the first encoding rate being within a preset encoding rate range, the second number of the frequency-domain subchannel and the first encoding rate as transmission parameters.

Before determining the second number of the frequency-domain subchannel, the processor 880 is configured to: determine a third number of the frequency-domain subchannel, in which the third number of the frequency-domain subchannel is less than the second number of the frequency-domain subchannel; and determine a second encoding rate, according to the third number of the frequency-domain subchannel and the amount of the data to be transmitted.

The processor 880 is specifically configured to determine the second number of the frequency-domain subchannel, in response to the second encoding rate being not within a preset encoding rate range.

In at least one alternative embodiment, the processor 880 is further configured to discard the data to be transmitted, in response to the first encoding rate being not within the preset encoding rate range.

In at least one alternative embodiment, the processor 880 is specifically configured to: determine, in the future authorized transmission window, a maximum channel occupancy ratio corresponding to the priority of the data to be transmitted;

calculate a total number of an available frequency-domain subchannel in the future authorized transmission window; and calculate, according to the maximum channel occupancy ratio and the total number of the available frequency-domain subchannel, the maximum number of the frequency-domain subchannel corresponding to the data to be transmitted.

In at least one alternative embodiment, the processor 880 is specifically configured to: calculate a total number of an available frequency-domain subchannel in a resource pool in the current transmission time window;

calculate a number of the frequency-domain subchannel used by transmitted data in the current transmission time window; calculate, according to the total number of the available frequency-domain subchannel in the resource pool and the number of the frequency-domain subchannel used by the transmitted data, the total number of available frequency-domain subchannel in the future authorized transmission window; and

In at least one alternative embodiment, the processor 880 is specifically configured to take, in response to the first number of the frequency-domain subchannel being less than or equal to the maximum number of the frequency-domain subchannel, the first number of the frequency-domain subchannel as a transmission parameter for transmitting the data to be transmitted.

Some embodiments of the disclosure provide a computer-readable storage medium. The computer readable storage medium stores a computer program, and the computer program is configured to implement various processes performed by the terminal device in the above method embodiments, and the same technical effect can be achieved. Details are not repeated to avoid repetition.

Specifically, the computer-readable storage medium may be a read-only memory (ROM), a random access memory (RAM), a magnetic disk, an optical disk, or the like.

It is to be noted that, in the disclosure, the terms "including", "comprising" or any other variation thereof are intended to cover non-exclusive inclusion, so that a process, method, product or device that includes not only a series of listed elements, but also other elements not explicitly listed, or elements inherent in such process, method, product or device. Without more limitations, an element defined in a statement "including a/an ... " does not exclude existence of additional same elements in the process, the method, an item or the apparatus.

Based on the descriptions of the foregoing implementations, those skilled in the art may clearly understand that the method in the foregoing embodiments may be implemented by software in addition to a necessary universal hardware platform or by hardware only, but in many cases the former is the better implementation. Based on such an understanding, the technical solutions of the present disclosure essentially or the part contributing to the prior art may be implemented in a form of a software product. The computer software product is stored in a storage medium (such as a ROM/RAM, a hard disk, or an optical disc), and includes several instructions for instructing a terminal (which may be a mobile phone, a computer, a server, an air conditioner, a network device, or the like) to perform the methods described in the various embodiments of the disclosure.

Embodiments of the disclosure are described above with reference to the accompanying drawings, but the disclosure is not limited to the above specific embodiments, and the above specific embodiments are only illustrative and not restrictive. Under the enlightenment of the disclosure, those of ordinary skill in the art can make many forms of modifications and improvements without departing from the purpose of the disclosure and the scope of protection of the appended claims, all of which should fall within the scope of protection of the disclosure.

**Claims**

1. A transmission parameter determination method, comprising:

determining a first number of a frequency-domain subchannel allocated for data to be transmitted;

determining, in a future authorized transmission window within a current transmission time window, a maximum number of the frequency-domain subchannel corresponding to the data to be transmitted, wherein the maximum number of the frequency-domain subchannel is determined according to a limitation of a channel occupancy ratio; and

taking a second number of the frequency-domain subchannel as a transmission parameter for transmitting the data to be transmitted, in response to the first number of the frequency-domain subchannel being greater than the maximum number of the frequency-domain subchannel;

wherein the second number of the frequency-domain subchannel is less than or equal to the maximum number of the frequency-domain subchannel.

2. The method as claimed in claim 1, wherein the taking a second number of the frequency-domain subchannel as a transmission parameter for transmitting the data to be transmitted, comprises:

determining the second number of the frequency-domain subchannel;

determining a first encoding rate, according to the second number of the frequency-domain subchannel and an amount of the data to be transmitted; and

taking the second number of the frequency-domain subchannel and the first encoding rate as transmission parameters.

3. The method as claimed in claim 2, wherein the taking the second number of the frequency-domain subchannel and the first encoding rate as transmission parameters, comprises:

taking, in response to the first encoding rate being within a preset encoding rate range, the second number of the frequency-domain subchannel and the first encoding rate as the transmission parameters.

4. The method of claim 2, further comprising:

determining a third number of the frequency-domain subchannel, wherein the third number of the frequency-domain subchannel is less than the second number of the frequency-domain subchannel; and

determining a second encoding rate, according to the third number of the frequency-domain subchannel and the amount of the data to be transmitted;

wherein the determining the second number of the frequency-domain subchannel, specifically comprises:

determining the second number of the frequency-domain subchannel, in response to the second encoding rate being not within a preset encoding rate range.

5. The method as claimed in claim 3, further comprising:

discarding the data to be transmitted, in response to the first encoding rate being not within the preset encoding rate range.

6. The method as claimed in claim 1, wherein the determining, in a future authorized transmission window within a current transmission time window, a maximum number of the frequency-domain subchannel corresponding to the data to be transmitted, comprises:

determining, in the future authorized transmission window, a maximum channel occupancy ratio corresponding to the data to be transmitted;

calculating a total number of an available frequency-domain subchannel in the future authorized transmission window; and

calculating, according to the maximum channel occupancy ratio and the total number of the available frequency-domain subchannel, the maximum number of the frequency-domain subchannel corresponding to the data to be transmitted.

7. The method as claimed in claim 6, wherein the calculating a total number of an available frequency-domain subchannel in the future authorized transmission window, comprises:

calculating, in the current transmission time window, a total number of an available frequency-domain subchannel in a resource pool;

calculating, in the current transmission time window, a number of a frequency-domain subchannel used by transmitted data; and

calculating, according to the total number of the available frequency-domain subchannel in the resource pool and the number of the frequency-domain subchannel used by the transmitted data, the total number of the available frequency-domain subchannel in the future authorized transmission window.

8. The method as claimed in claim 1, wherein after the determining, in a future authorized transmission window within a current transmission time window, a maximum number of the frequency-domain subchannel corresponding to the data to be transmitted, the method further comprises:

taking, in response to the first number of the frequency-domain subchannel being less than or equal to the maximum number of the frequency-domain subchannel, the first number of the frequency-domain subchannel as a transmission parameter for transmitting the data to be transmitted.

9. The method as claimed in any one of claims 1-8, wherein the determining a first number of a frequency-domain subchannel allocated for data to be transmitted, comprises:

determining a priority of the data to be transmitted; and
determining, according to the priority of the data to be transmitted, the first number of the frequency-domain subchannel allocated for data to be transmitted.

10. A terminal device, comprising: a processor, a memory, and a computer program stored on the memory and executable by the processor, the processor is configured, when the computer program is executed by the processor, to:

determine a first number of a frequency-domain subchannel allocated for data to be transmitted;
determine, in a future authorized transmission window within a current transmission time window, a maximum number of the frequency-domain subchannel corresponding to the data to be transmitted, wherein the maximum number of the frequency-domain subchannel is determined according to a limitation of a channel occupancy ratio; and
take a second number of the frequency-domain subchannel as a transmission parameter for transmitting the data to be transmitted, in response to the first number of the frequency-domain subchannel being greater than the maximum number of the frequency-domain subchannel;
wherein the second number of the frequency-domain subchannel is less than or equal to the maximum number of the frequency-domain subchannel.

11. The terminal device as claimed in claim 10, wherein the processor is specifically configured to:

determine the second number of the frequency-domain subchannel;
determine a first encoding rate, according to the second number of the frequency-domain subchannel and an amount of the data to be transmitted; and
take the second number of the frequency-domain subchannel and the first encoding rate as transmission parameters.

12. The terminal device as claimed in claim 11, wherein the processor is specifically configured to:
take, in response to the first encoding rate being within a preset encoding rate range, the second number of the frequency-domain subchannel and the first encoding rate as the transmission parameters.

13. The terminal device as claimed in claim 11, wherein the processor is further configured to:

determine a third number of the frequency-domain subchannel, wherein the third number of the frequency-domain subchannel is less than the second number of the frequency-domain subchannel; and
determine a second encoding rate, according to the third number of the frequency-domain subchannel and the amount of the data to be transmitted;
wherein the determine the second number of the frequency-domain subchannel, comprises:
determining the second number of the frequency-domain subchannel, in response to the second encoding rate being not within a preset encoding rate range.

14. The terminal device as claimed in claim 12, wherein the processor is further configured to:
discard the data to be transmitted, in response to the first encoding rate being not within the preset encoding rate range.

15. The terminal device as claimed in claim 10, wherein the processor is specifically configured to:

determine, in the future authorized transmission window, a maximum channel occupancy ratio corresponding to the data to be transmitted;
calculate a total number of an available frequency-domain subchannel in the future authorized transmission window; and
calculate, according to the maximum channel occupancy ratio and the total number of the available frequency-domain subchannel, the maximum number of the frequency-domain subchannel corresponding to the data to be transmitted.

16. The terminal device as claimed in claim 15, wherein the processor is specifically configured to:

calculate, in the current transmission time window, a total number of an available frequency-domain subchannel in a resource pool;
calculate, in the current transmission time window, a number of a frequency-domain subchannel used by transmitted data; and
calculate, according to the total number of the available frequency-domain subchannel in the resource pool and the number of the frequency-domain subchannel used by the transmitted data, the total number of the available frequency-domain subchannel in the future authorized transmission window.

17. The terminal device as claimed in claim 10, wherein the processor is further configured to:
take, in response to the first number of the frequency-domain subchannel being less than or equal to the maximum number of the frequency-domain subchannel, the first number of the frequency-domain subchannel as a transmission parameter for transmitting the data to be transmitted.

18. The terminal device as claimed in any one of claims 10 to 17, wherein the processor is specifically configured to:

    determine a priority of the data to be transmitted; and
    determine, according to the priority of the data to be transmitted, the first number of the frequency-domain subchannel allocated for data to be transmitted.

19. A computer readable storage medium, wherein the computer readable storage medium is stored with a computer program, and the computer program is configured to be executed by a processor to implement the transmission parameter determination method as claimed in any one of claims 1 to 9.

cellular network

FIG. 1

history transmission window
[n-a, n-1]

future authorized transmission window
[n, n+b]

sub-frame
n-a

the data with priority 1 will be
periodically transmitted s t a r t i n g
from the sub-frame n , t h e data
transmitted this time will be
discarded since the limitation of the
channel oc cupancy ratio is not
satisfied

sub-frame
n+b

FIG. 2

determine a first number of a frequency-domain subchannel allocated for data to be transmitted /301

↓

determine, in a future authorized transmission window within a current transmission time window, a maximum number of the frequency-domain subchannel corresponding to the data to be transmitted /302

↓

determine whether the first number of the frequency-domain subchannel is greater than the maximum number of the frequency-domain subchannel 303

Yes →

take the first number of the frequency-domain subchannel as a transmission parameter for transmitting the data to be transmitted /305

No ↓

take a second number of the frequency-domain subchannel as a transmission parameter for transmitting the data to be transmitted /304

FIG. 3

history transmission window
[n-a, n-1]

future authorized transmission window
[n, n+b]

sub-frame n-a

the data with priority 1 will be periodically transmitted starting from the sub-frame n, the data transmitted this time will be discarded since the limitation of the channel occupancy rate is not satisfied

sub-frame n+b

▨  transmission of priority 0
⊠  transmission of priority 1

frequency-domain subchannels after being reduced, satisfying the limitation of the channel occupancy ratio

subchannel n

occupied subchannel

subchannel n+1

occupied subchannel n

FIG. 4

17

determine a first number of a frequency-domain subchannel allocated for a priority of data to be transmitted — 501

determine, in a future authorized transmission window within a current transmission time window, a maximum number of the frequency-domain subchannel corresponding to the data to be transmitted — 502

determine whether the first number of the frequency-domain subchannel is greater than the maximum number of the frequency-domain subchannel — 503

No

take a first frequency-domain subchannel as a transmission parameter for transmitting the data to be transmitted — 509

Yes

take a second number of the frequency-domain subchannel as a transmission parameter for transmitting the data to be transmitted — 504

determine a first encoding rate, according to the second number of the frequency-domain subchannel and an amount of the data to be transmitted — 505

determine whether the first encoding rate is within a preset encoding rate range — 506

discard the data to be transmitted — 508

take the second number of the frequency-domain subchannel and the first encoding rate as transmission parameters — 507

FIG. 5

determine a first number of a frequency-domain subchannel allocated for a priority of data to be transmitted — 601

determine, in a future authorized sending window within a current transmission time window, a maximum number of the frequency-domain subchannel corresponding to the priority of the data to be transmitted — 602

determine whether the first number of the frequency-domain subchannel is greater than the maximum number of the frequency-domain subchannel — 603

No — take the first frequency-domain subchannel as a transmission parameter for transmitting the data to be transmitted — 613

Yes

determine a third number of the frequency-domain subchannel — 604

determine a second encoding rate, according to the third number of the frequency-domain subchannel and the amount of the data to be transmitted — 605

determine whether the first encoding rate is within the preset encoding range — 606

take the third number of the frequency-domain subchannel and the second encoding rate as transmission parameters — 607

determine the third number of the frequency-domain subchannel — 608

determine a first encoding rate, according to a second number of the frequency-domain subchannel and an amount of the data to be transmitted — 609

determine whether the first encoding rate is within the preset encoding range — 610

discard the data to be transmitted — 612

take the second number of the frequency-domain subchannel and the first encoding rate as transmission parameters — 611

FIG. 6

transmission parameter
determination apparatus

processing module
701

FIG. 7

810 — RF circuit

WiFi module — 870

890

power
supply

880

processor

860

audio circuit

speaker861

microphone
862

820

memory

sensor — 850

input unit

touch panel — 831

830

another input
device

display unit — 840

display panel

832

841

FIG. 8

## INTERNATIONAL SEARCH REPORT

| International application No. |
|---|
| **PCT/CN2021/107406** |

**A. CLASSIFICATION OF SUBJECT MATTER**

H04L 5/00(2006.01)i; H04W 4/40(2018.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 用户设备, 发送参数, 确定, 评估, 信道占用率, 限制, 减少, 子信道, 数量, UE, transmission parameter+, TX parameter+, determin+, evaluat+, channel occupancy ratio, CR, limit+, reduc+, sub?channel, number

**C. DOCUMENTS CONSIDERED TO BE RELEVANT**

| Category* | Citation of document, with indication, where appropriate, of the relevant passages | Relevant to claim No. |
|---|---|---|
| PX | CN 112350813 A (GUANGDONG OPPO MOBILE TELECOMMUNICATIONS CORP., LTD.) 09 February 2021 (2021-02-09)<br>claims 1-12, description paragraphs [0027]-[0179] | 1-19 |
| Y | CN 110572794 A (SPREADTRUM COMMUNICATIONS SHANGHAI INC.) 13 December 2019 (2019-12-13)<br>description, paragraphs [0030]-[0101] | 1-19 |
| Y | CN 108024287 A (BEIJING SAMSUNG TELECOM R&D CENTER et al.) 11 May 2018 (2018-05-11)<br>description paragraphs [0092]-[0174] | 1-19 |
| A | NOKIA et al. "Remaining Details of QoS Management for Sidelink"<br>*3GPP TSG RAN WG1 #100-e e-Meeting R1-2000388*, 15 February 2020 (2020-02-15), pp. 1-9 | 1-19 |
| A | INTEL CORPORATION. "Details of Congestion Control for V2V Communication"<br>*3GPP TSG RAN WG1 Meeting #88 R1-1702142*, 07 February 2017 (2017-02-07), sections 1-3 | 1-19 |

☑ Further documents are listed in the continuation of Box C.    ☑ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
|---|---|
| **16 September 2021** | **28 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/107406**

**C.    DOCUMENTS CONSIDERED TO BE RELEVANT**

| Category* | Citation of document, with indication, where appropriate, of the relevant passages | Relevant to claim No. |
|---|---|---|
| A | CN 109644367 A (QUALCOMM INC.) 16 April 2019 (2019-04-16)<br>entire document | 1-19 |
| A | CN 110249678 A (LG ELECTRONICS INC.) 17 September 2019 (2019-09-17)<br>entire document | 1-19 |

Form PCT/ISA/210 (second sheet) (January 2015)

INTERNATIONAL SEARCH REPORT
Information on patent family members

International application No.

**PCT/CN2021/107406**

| Patent document cited in search report | | | Publication date (day/month/year) | Patent family member(s) | | | Publication date (day/month/year) |
|---|---|---|---|---|---|---|---|
| CN | 112350813 | A | 09 February 2021 | None | | | |
| CN | 110572794 | A | 13 December 2019 | None | | | |
| CN | 108024287 | A | 11 May 2018 | US | 2019313279 | A1 | 10 October 2019 |
| | | | | EP | 3504897 | A4 | 23 October 2019 |
| | | | | CN | 107889158 | A | 06 April 2018 |
| | | | | EP | 3504897 | A1 | 03 July 2019 |
| | | | | KR | 20190049780 | A | 09 May 2019 |
| | | | | IN | 201937009301 | A | 26 April 2019 |
| | | | | WO | 2018062832 | A1 | 05 April 2018 |
| CN | 109644367 | A | 16 April 2019 | ID | 201902625 | A | 12 April 2019 |
| | | | | US | 10447596 | B2 | 15 October 2019 |
| | | | | US | 2018048577 | A1 | 15 February 2018 |
| | | | | IN | 201847049123 | A | 11 January 2019 |
| | | | | KR | 20190038555 | A | 08 April 2019 |
| | | | | JP | 2019527994 | A | 03 October 2019 |
| | | | | CA | 3029709 | A1 | 15 February 2018 |
| | | | | BR | 112019002503 | A2 | 14 May 2019 |
| | | | | WO | 2018031160 | A1 | 15 February 2018 |
| | | | | EP | 3497963 | A1 | 19 June 2019 |
| CN | 110249678 | A | 17 September 2019 | EP | 3579631 | A4 | 11 November 2020 |
| | | | | JP | 2020506626 | A | 27 February 2020 |
| | | | | KR | 20180099750 | A | 05 September 2018 |
| | | | | EP | 3579631 | A1 | 11 December 2019 |
| | | | | WO | 2018143725 | A1 | 09 August 2018 |
| | | | | KR | 102007854 | B1 | 06 August 2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020110922491